# FASCICULE DE BREVET EUROPEEN

(11) **EP 4 085 382 B1**
(45) Date de publication et mention de la délivrance du brevet: **18.10.2023**
(21) Numéro de dépôt: 20848796.7
(22) Date de dépôt: 30.12.2020
(51) Int. Cl.: G06K 19/077

(54) **MODULE ÉLECTRONIQUE À ANTENNE OPTIMISÉE POUR CARTE À PUCE À DOUBLE INTERFACE DE COMMUNICATION**
FÜR EINE CHIPKARTE MIT DOPPELTER KOMMUNIKATIONSSCHNITTSTELLE OPTIMIERTES ELEKTRONISCHES ANTENNENMODUL
ELECTRONIC ANTENNA MODULE OPTIMISED FOR A CHIP CARD WITH A DUAL COMMUNICATION INTERFACE

(30) Priorité: 31.12.2019 FR 1915792
(43) Date de publication de la demande: 09.11.2022
(73) Titulaire: Smart Packaging Solutions, 13790 Rousset (FR)
(72) Inventeur: MARMUGI, Sebastien, 13790 ROUSSET (FR); DANLER BAUMGARTNER, Stephan, 13790 ROUSSET (FR); GUERIN, Guillaume, 13790 ROUSSET (FR)
(74) Mandataire: Nicolle, Olivier
(86) Numéro de dépôt international: PCT/FR2020/000285
(87) Numéro de publication internationale: WO 2021/136890

(56) Documents cités:
- DE-A1-102013 102 052
- US-A1- 2009 085 133
- US-A1- 2014 014 732
- US-A1- 2017 206 448

## Description

L'invention concerne un module électronique à double interface de communication à contact et sans contact, et une carte à puce intégrant un tel module.

### État de la technique

Il existe déjà dans l'état de la technique des cartes à puce à fonctionnement mixte à contact et sans contact. La plupart présente un module microélectronique pourvu d'une part de contacts normalisés selon la norme ISO 7816-2 correspondants aux contacts d'un lecteur de cartes à puce, et d'autre part d'une interface de communication radiofréquence pourvue d'au moins une antenne et apte à communiquer avec l'antenne d'un lecteur sans contact.

Lorsque la carte à puce comporte une antenne réalisée dans le corps de carte, elle est quelquefois connectée directement à l'interface sans contact du module microélectronique, et cette connexion mécanique entre l'antenne et le module induit alors des pertes de fiabilité ou de rendement de fabrication. En effet, les sollicitations mécaniques et thermiques imposées à la carte lors de son utilisation peuvent entraîner des ruptures de la connexion entre le module et l'antenne, ou des augmentations fortes de la résistance électrique de cette connexion, entraînant une perte de performance de la carte au cours de son utilisation.

C'est pourquoi on a utilisé de plus en plus souvent des modules pour cartes à puce à double interface de communication, comportant une petite antenne située directement sur le module, et une seconde antenne de plus grande taille située dans le corps de carte, encore appelée antenne "booster", couplée avec l'antenne du module mais non physiquement connectée à elle.

Dans ce cas, pour fabriquer une carte à puce, il suffit de simplement reporter le module à double interface de communication dans un corps de carte à puce, ce qui est aisé à réaliser avec un faible coût et une grande fiabilité avec la plupart des machines d'encartage classiques utilisées pour la fabrication des cartes à puce à contact.

Mais de nouveaux problèmes sont apparus. Ainsi, les modules à double interface de communication possédant des contacts métalliques sur leur face supérieure, et une puce microélectronique ainsi que les pistes de l'antenne du module situées sur leur face inférieure, la connexion électrique des bornes de la puce avec les contacts et l'antenne a nécessité la réalisation de vias métallisés réalisant une connexion électrique entre les deux faces du module, avec pour effet des coûts de production plus élevés.

Un exemple d'un tel module est décrit dans le document US 2014/0014732 A1, dans lequel le module comporte plusieurs tronçons d'antennes formant des nappes qui s'entrecroisent, connectées par des vias.

Pour remédier à ce problème, il a été prévu de déplacer les deux extrémités de l'antenne du module à l'intérieur de la zone d'encapsulation de la puce. De cette manière, les bornes de la puce pouvaient être connectées à la fois aux contacts ISO et aux bornes de l'antenne du module, à l'intérieur de la goutte d'encapsulation de la puce, sans que des vias ne soient nécessaires.

Par contre, pour éviter des croisements de fils et donc des courts-circuits, il a fallu détourner la nappe de spires de l'antenne du module pour l'amener en partie dans la zone d'encapsulation, sous la forme d'un décrochement de la nappe de spires contournant l'extrémité distale de l'antenne (à savoir l'extrémité de la spire externe de l'antenne du module). Mais cette disposition nécessite une goutte de résine d'enrobage de la puce de plus grande taille, et des fils de câblage plus longs entre l'antenne et la puce. Cela est incompatible avec les machines d'encartage existantes, donc la fabrication de modules pourvus d'une antenne à décrochement localisé nécessite de nouvelles machines, ce qui entraine un surcoût. En outre la taille supérieure de la goutte de résine d'enrobage nécessite d'éloigner les spires de l'antenne booster, ce qui peut engendrer des baisses des performances radiofréquence de la carte à puce équipée d'un tel module.

On a constaté par ailleurs un autre problème lié au procédé de fabrication de l'antenne du module. Celle-ci est typiquement obtenue par métallisation du substrat à l'aide de pistes d'amenée de courant. On a constaté que la qualité de la métallisation obtenue dépend de la longueur des spires de l'antenne. En particulier, avec les antennes connues, l'extrémité de l'antenne qui est la plus éloignée d'une amenée de courant est moins bien métallisée que l'autre extrémité, ce qui peut entraîner un défaut de qualité de la connexion de l'antenne à l'une des bornes de l'interface sans contact de la puce.

### Buts de l'invention

Un but général de l'invention est par conséquent de proposer un module électronique à double interface de communication à contact et sans contact, qui soit dépourvu des inconvénients précités.

Un but spécifique de l'invention est de proposer un module électronique pour carte à puce présentant une structure apte à résoudre les problématiques contradictoires exposées plus haut, et notamment de proposer un module qui soit dépourvu de vias et d'un décrochement localisé des spires, afin de pouvoir conserver une goutte d'enrobage de faibles dimensions.

### Résumé de l'invention

Dans son principe, l'invention prévoit une nouvelle conception de l'antenne du module. Celle-ci est conçue sous la forme de deux demi-antennes réalisées par deux enroulements de spires au lieu d'un seul, et ces enroulements sont chacun disposés de manière à entourer l'une des extrémités de l'antenne et une partie des puits de connexion entre les contacts du module et des bornes de la puce, de façon à présenter une nappe de spires qui passe entre les puits de connexion.

L'invention a par conséquent pour objet un module électronique pour carte à puce, comportant un substrat présentant sur une première face un bornier de contacts électriques normalisés selon la norme ISO 7816 permettant un fonctionnement par contact avec les contacts correspondants d'un lecteur de carte à puce et des puits de connexion positionnés en vis-à-vis desdits contacts normalisés, ledit substrat comportant sur une seconde face une antenne, et une puce microélectronique protégée par une zone d'encapsulation et pourvue d'une interface de communication à contact et d'une interface de communication sans contact pourvue de deux bornes destinées à être connectées aux deux extrémités d'une antenne du module électronique disposées à l'intérieur de la zone d'encapsulation, caractérisé en ce que l'antenne du module comporte deux enroulements distincts de spires s'étendant entre ses deux extrémités, ces deux enroulements étant configurés de manière qu'un premier enroulement de spires démarre à partir d'une première extrémité, s'enroule autour de premiers puits de connexion et rejoint le second enroulement de spires qui s'enroule autour de seconds puits de connexion et s'étend jusqu'à la seconde extrémité de l'antenne.

Cette disposition assure que les deux enroulements distincts et non concentriques de spires de l'antenne sont disposés de manière qu'aucun desdits enroulements de spires n'entoure l'ensemble des puits de connexion du module connectés aux contacts normalisés et la puce.

Selon un mode de réalisation du module, lesdits enroulements sont coplanaires.

Selon un mode de réalisation, les deux enroulements de spires sont connectés en série et s'enroulent dans un même sens. Dans ce cas, le courant électrique de l'antenne circule dans le même sens dans les spires de l'antenne situées entre lesdits premiers puits de connexion et lesdits seconds puits de connexion.

Selon un autre mode de réalisation, les deux enroulements de spires sont connectés en série et s'enroulent dans des sens opposés. Dans ce cas, le courant électrique de l'antenne circule dans des sens opposés dans les spires de l'antenne situées entre lesdits premiers puits de connexion et lesdits seconds puits de connexion.

Selon un mode de réalisation, l'inductance L de l'antenne est comprise entre 1 et 2,3 micro-Henry et la puce présente une capacité comprise entre 17 et 70 pico Farad.

L'invention a également pour objet une carte à puce à double interface de communication à contact et sans contact, caractérisée en ce qu'elle comporte un module électronique présentant les caractéristiques ci-dessus.

D'autres caractéristiques et avantages de l'invention apparaîtront à la lecture de la description détaillée et des dessins annexés dans lesquels :
- les Figures 1A, 1B et 1C sont des vues en plan d'un module électronique à double interface de communication conforme à l'état de la technique, pourvus de vias ;
- les figures 2A, 2B et 2C sont des vues en plan d'un autre module électronique conforme à l'état de la technique, dépourvu de vias mais pourvu d'un décroché des spires de l'antenne ;
- les figures 3A à 3C représentent un premier mode de réalisation du module électronique selon l'invention ;
- les figures 4A à 4C représentent un second mode de réalisation du module électronique selon l'invention ;
- la figure 5A représente schématiquement les amenées de courant pour métalliser une antenne de module électronique selon l'état de la technique ;
- la figure 5B représente schématiquement la métallisation d'une antenne de module électronique conforme à l'invention.

### Description détaillée

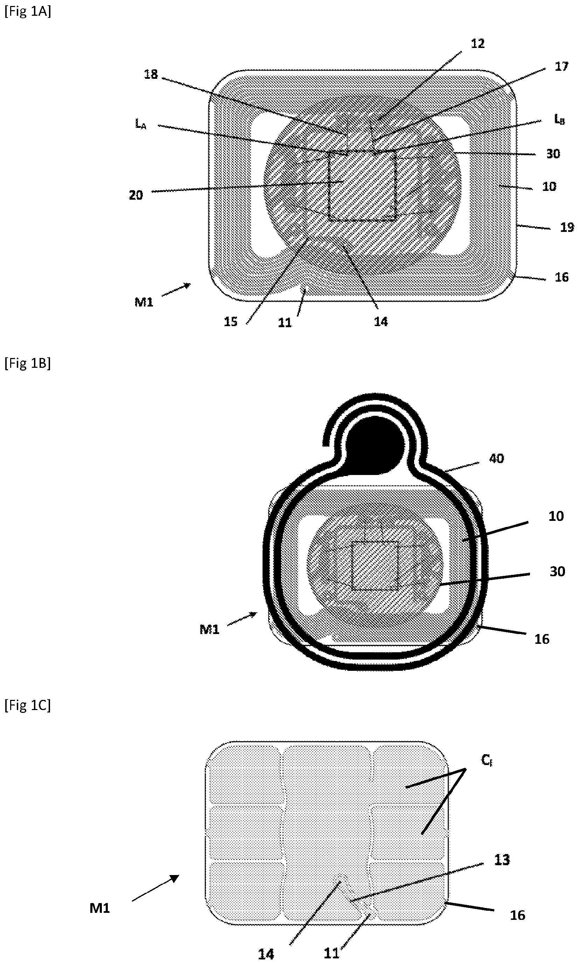

La Figure 1 correspond à un premier mode de réalisation d'un module électronique M1 pour carte à puce conforme à l'état de la technique. Le module M1 comporte une antenne 10 et une puce microélectronique 20, représentée en transparence à travers une goutte d'encapsulation 30 protégeant la puce microélectronique 20. L'antenne 10 comporte un ensemble de spires s'étendant entre une extrémité distale 11, qui est l'extrémité de la spire externe, et une extrémité proximale 12, qui est l'extrémité de la spire interne. L'extrémité proximale 12 de l'antenne est connectée par un fil de connexion 17 à un plot de connexion LB de l'interface sans contact de la puce 20. L'extrémité distale 11 de l'antenne 10 est située en-dehors de la zone protégée par la goutte de résine d'encapsulation 30. Elle est ramenée vers une connexion 14 située à l'intérieur de cette goutte d'encapsulation par une connexion 13 visible sur la face avant du module et formant un pont au-dessus des spires de l'antenne, comme représenté en figure 1C. Cela nécessite que les connexions 11 et 14 soient réalisées sous la forme de vias métalliques traversant le substrat 19 du module, ce qui est coûteux d'un point de vue industriel. Il en résulte en outre que l'on voit sur la face avant du module, non seulement les contacts normalisés Ci, mais aussi la connexion 13 en forme de pont, ce qui est peu accepté par le marché.

En figure 1B on a représenté le module M1 de la figure 1A, vu du côté de l'antenne et de la goutte d'encapsulation, avec une représentation en superposition de l'antenne booster 40 qui est intégrée au corps de carte (non représenté). La résine d'encapsulation 30, de par son épaisseur, nécessite d'être placée dans une cavité d'encartage plus profonde que celle réservée au contour du module. Ainsi, la cavité accueillant la résine d'encapsulation 30 du module risque de couper des spires de l'antenne booster 40. De ce fait, l'antenne booster 40 doit se situer autour de cette cavité profonde et assez éloignée pour prendre en compte les tolérances d'usinage en production.

D'un point de vue industriel, les spires de l'antenne 10 sont formées par métallisation à partir d'amenées de courant 16 situées aux quatre coins du module.

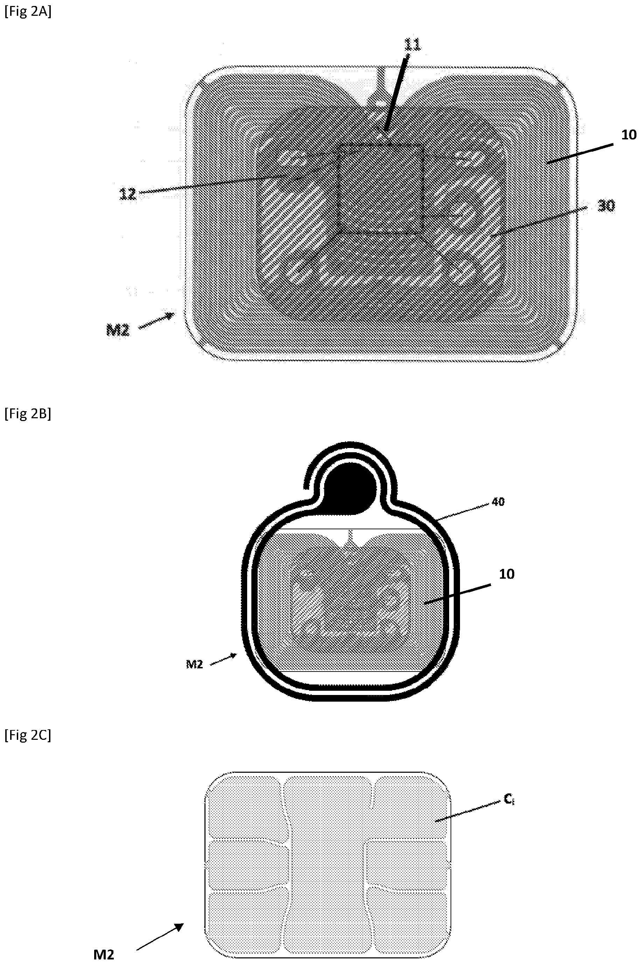

Pour éviter les problèmes précités liés à la présence des vias 11, 14 et du pont 13, un module modifié M2 a été proposé dans l'état de la technique, tel que représenté en figures 2A à 2C.

Dans cette configuration, l'extrémité proximale 12 et l'extrémité distale 11 de l'antenne 10 sont toutes deux situées dans la goutte d'encapsulation 30, ce qui évite la nécessité de vias et d'un pont, comme cela est visible sur la face avant du module M2 représentée en figure 2C. Mais l'intégration des deux extrémités 11, 12 d'antenne dans la goutte d'encapsulation 30 nécessite que celle-ci soit plus grande que dans le mode de réalisation précédent (figure 1), ce qui nécessite l'usage de machines d'encartage spécifiques. En outre, comme visible sur la figure 2B, les tolérances de fabrication de la cavité du module nécessitent que les spires de l'antenne booster 40 soient plus écartées des spires de l'antenne 10 du module, ce qui nuit à la performance radiofréquence de ce module.

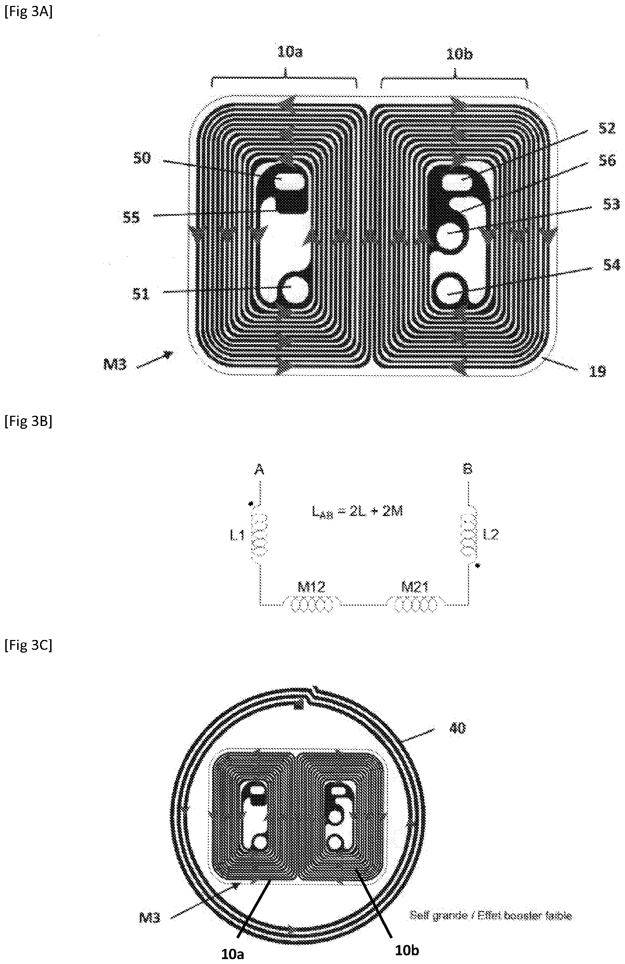

Pour résoudre simultanément les différents problèmes techniques évoqués, l'invention propose les modes de réalisation des figures 3 à 5.

La figure 3A décrit un premier mode de réalisation de l'invention. L'antenne 10 du module comporte maintenant deux enroulements distincts connectés en série et notés 10a, 10b. Le premier enroulement 10a démarre à son extrémité 55, entoure deux puits de connexion 50, 51 (appelés puits de « bonding » en terminologie anglo-saxonne) sur la partie gauche du module M3 et se poursuit par le deuxième enroulement 10b qui entoure trois puits de connexion (bonding) 52, 53, 54 de la partie droite du module M3, et se termine à l'extrémité 56 du second enroulement 10b.

On rappelle qu'un puits de connexion ou de « bonding » est un trou dans le substrat 19 du module qui se trouve en vis-à-vis d'un contact ISO 7816 situé sur l'autre face du module. Lors de la phase de câblage de la puce du module, on vient disposer un fil de connexion partant en général de la puce, plongeant à travers le puit de connexion et venant se souder à l'arrière d'un contact ISO 7816 de façon à assurer une connexion électrique entre ce contact ISO et une borne de l'interface à contact de la puce.

En l'espèce, les puits de connexion permettent la connexion entre les contacts ISO de la face avant du module et les bornes suivantes de la puce :
- 50 :: GND (masse)
- 51 :: I/O (signal de communication)
- 52 :: VCC (alimentation électrique)
- 53 :: RST (reset = remise à zéro)
- 54:: CLK (horloge).

En partant de son extrémité 55, l'enroulement 10a s'enroule dans le sens inverse des aiguilles d'une montre autour de son extrémité 55 et des puits de connexion 50, 51, puis il se prolonge par l'enroulement 10b qui s'enroule dans le sens des aiguilles d'une montre autour des puits de connexion 52, 53, 54 et de son extrémité 56.

Il s'ensuit que dans la zone des deux enroulements de l'antenne située entre les puits de connexion, les courants électriques qui circulent dans les deux enroulements 10a, 10b de l'antenne circulent dans le même sens, et dans les spires des enroulements 10a, 10b situées à l'extérieur des puits de connexion, les courants électriques circulent en sens inverse, comme schématisé par les flèches sur les spires des enroulements 10a, 10b.

Les deux enroulements 10a, 10b correspondent à deux inductances L1 et L2 placées en série, comme représenté dans le schéma électrique équivalent de la figure 3B, et le courant circule dans le même sens dans ces deux inductances.

Ainsi, la valeur totale de l'inductance L_{AB} entre les deux points A et B correspond à la somme des deux inductances L1 et L2 en série à laquelle on ajoute la valeur des inductances mutuelles de L2 sur L1 (notée M21) et de L1 sur L2 (notée M12).

Dans le schéma 3B, L1 et L2 sont de même valeur L et placées de manière symétrique, les inductances mutuelles sont égales à M, et on a donc la valeur totale d'inductance qui est L_{AB}= 2L + 2M.

L'inductance du module est un facteur important pour avoir une technologie de cartes duales à couplage inductif efficace. Les puces 20 utilisées ont des capacités variant de 17 pF jusqu'à environ 70 pF. L'état de la technique montre qu'un module dont la fréquence de résonnance se situait légèrement en-dessous de 20MHz donnait de bonnes performances radiofréquences et permettait à un système composé d'une antenne booster et d'un module résonnant à ces fréquences de pouvoir être conforme à toutes les spécifications ISO et EMVCo portant sur les transactions avec des cartes à puce sans contact.

Il devient donc primordial pour un module d'avoir une valeur d'inductance suffisante, c'est-à-dire au-delà de 1 µH.

La figure 3C représente la partie 40 de l'antenne booster présente dans le corps de carte, et qui est sensiblement de même taille que l'antenne 10 du module. Lorsqu'on représente le courant circulant dans l'antenne 40 du booster, on remarque que le sens du courant dans l'antenne booster 40 est identique à celui du module M3 dans la partie gauche de l'antenne 40, et opposé dans la partie droite de celle-ci. Si l'on fait attention aux parties hautes et basses du module, le courant dans l'antenne 40 du booster est dans le même sens que le courant dans l'enroulement 10a du module, et dans le sens opposé à celui du courant dans l'enroulement 10b du module. Il en résulte que malgré le fait que la fréquence de résonnance du module soit optimisée, du fait des sens de courant différents dans ces deux enroulements, ce mode de réalisation de donnera pas les performances suffisantes à une technologie de couplage inductif capable de passer l'ensemble des tests ISO et EMVCo des cartes sans-contact.

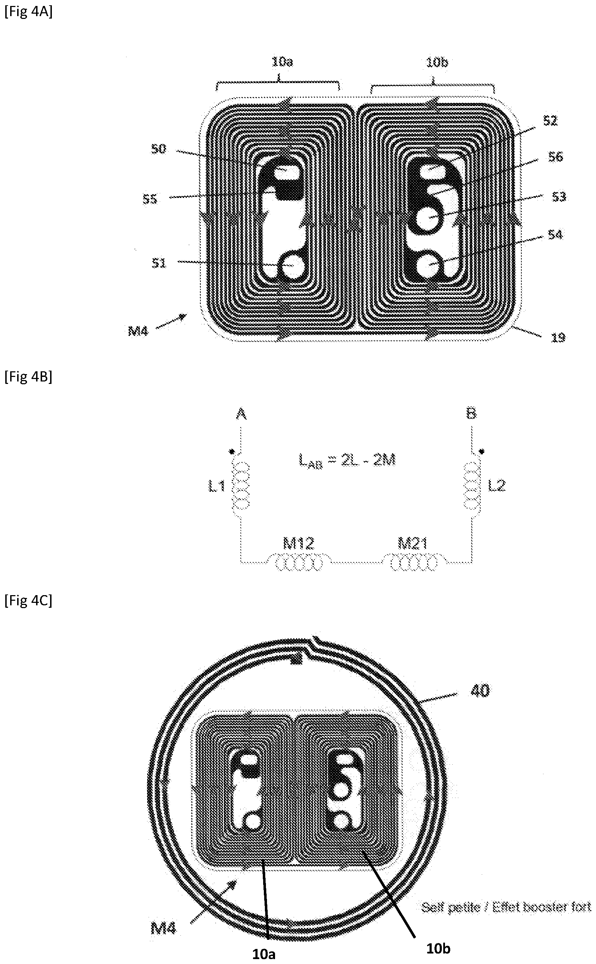

La figure 4A est similaire à la figure 3A et décrit un mode avantageux de réalisation de l'invention qui corrige les problèmes évoqués dans la description de la figure 3C. Cette fois, l'enroulement 10b de l'antenne 10 s'enroule dans le même sens que l'enroulement 10a. Il s'ensuit que dans la zone de l'antenne située entre les puits de connexion 50, 51 d'une part et 52, 53, 54 d'autre part, les courants électriques qui circulent dans les deux enroulements 10a, 10b de l'antenne circulent cette fois-ci en sens opposés, comme schématisé par les flèches sur les spires situées entre les deux ensembles de puits de connexion. L'inductance totale de l'antenne 10 du module M4 se verra diminuée de la double mutuelle inductance de L1 sur L2 et L2 sur L1. Avec les mêmes hypothèses que pour le module M3 de la figure 3, on aura donc pour l'inductance totale de l'antenne 10 du module une valeur égale à L_{AB} = 2L - 2M comme mentionné dans le schéma figure 4B.

La figure 4C représente le même type de schéma que la figure 3C. Désormais, on peut voir que tous les sens de rotation des courants dans les pistes externes des enroulements 10a, 10b qui sont voisines de celles de l'antenne 40 du concentrateur vont dans le même sens que le courant dans la petite antenne 40 du concentrateur, comme schématisé par les flèches sur les pistes. Ainsi, dans la partie supérieure du schéma 4C, tous les courants vont de droite à gauche, dans la partie inférieure, les courants (celui du concentrateur 40 et ceux des enroulements 10a et 10b de l'antenne 10 du module) vont de gauche à droite, dans la partie gauche, les courants vont de haut en bas et dans la partie droite, les courants vont de bas en haut.

Par conséquent, le mode de réalisation de la figure 4 donne une efficacité maximale : ce système constitué par l'antenne booster 40 couplée à l'antenne de module 10a, 10b de la figure 4A donne des performances suffisantes pour que la technologie de couplage inductif soit capable de passer l'ensemble des tests ISO et EMVCo des cartes à puce sans-contact.

Il est à noter que les modes de réalisation des figures 3 et 4 font appel à une antenne de module 10 constituée de deux enroulements 10a, 10b, mais il s'agit uniquement des exemples les plus simples. Le principe de l'invention s'étend à des enroulements comportant davantage d'enroulements, et d'autres formes d'antennes.

La structure d'antenne 10 de module réalisée en deux ou plus d'enroulements 10a, 10b telle que décrite plus haut permet aussi de résoudre le problème de la métallisation insuffisante des extrémités d'antenne.

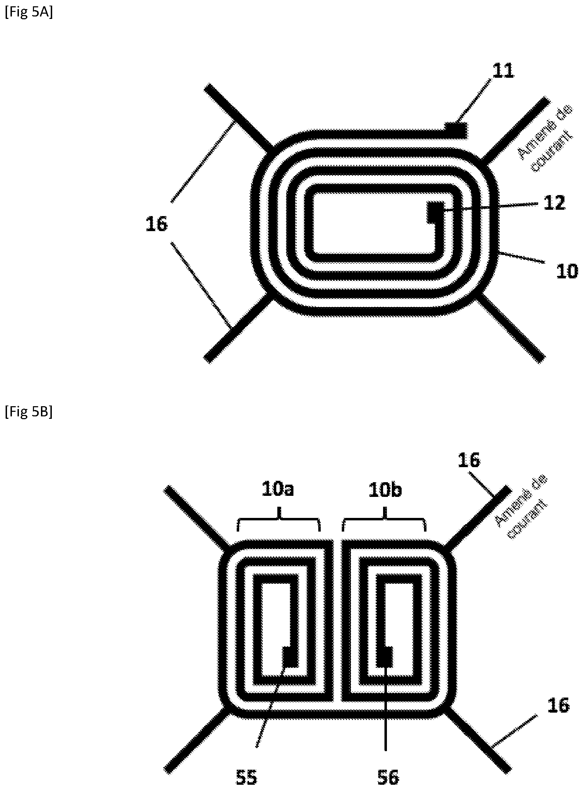

Comme représenté en figure 5A, les antennes 10 de module connues comportent un enroulement unique situé entre l'extrémité distale 11 et l'extrémité proximale 12 de l'antenne 10. Pour réaliser une telle antenne, il est connu de procéder à une métallisation du substrat 19 du module à l'aide de pistes d'amenée de courant 16. Pour atteindre l'extrémité proximale 12, le courant de métallisation doit parcourir toute la longueur de l'antenne 10. On voit bien que l'extrémité distale 11 est située bien plus près des amenées de courant 16, que l'extrémité proximale 12.

Au contraire, comme on le voit sur la figure 5B, lorsque l'antenne de module 10 comporte deux enroulements 10a, 10b, les extrémités 55, 56 des deux enroulements sont situées à égale distance des différentes pistes 16 d'amenée de courant de métallisation. Il en résulte que la métallisation des extrémités d'antennes 55, 56 sont non seulement égales, mais aussi de meilleure qualité, ce qui améliore la soudabilité des extrémités 55, 56 de l'antenne sur le module. En outre la distance entre les extrémités 55, 56 et les amenées de courant est sensiblement divisée par deux par rapport au cas de figure précédent, ce qui permet une métallisation plus rapide.

### Avantages de l'invention

En définitive, l'invention atteint les buts fixés. Cette structure de module pourvu d'une antenne à enroulements multiples permet d'obtenir un module sans vias, et sans zone de décrochement des pistes de l'antenne.

En outre, les extrémités de l'antenne du module sont situées au voisinage des puits de bonding, par conséquent la taille de la goutte de résine d'encapsulation est plus petite, ce qui permet à la fois un meilleur couplage radiofréquence, des fils de câblage vers la puce plus courts, et la compatibilité du module avec les outils standardisés des encarteurs. En outre, la longueur des enroulements de l'antenne module étant plus courte, cela permet une métallisation plus efficace.

## Revendications

1. Module électronique (1) pour carte à puce, comportant un substrat (19) présentant sur une première face un bornier de contacts électriques (Cᵢ) normalisés selon la norme ISO 7816 permettant un fonctionnement par contact avec les contacts correspondants d'un lecteur de carte à puce et des puits de connexion (50, 51, 52, 53, 54) positionnés en vis-à-vis desdits contacts normalisés, ledit substrat (19) comportant sur une seconde face une antenne (10) du module électronique (1) et une puce microélectronique (20) protégée par une zone d'encapsulation (30) et pourvue d'une interface de communication à contact et d'une interface de communication sans contact pourvue de deux bornes (L_{A}, L_{B}) destinées à être connectées aux deux extrémités (55, 56) de l'antenne (10) et disposées à l'intérieur de la zone d'encapsulation, **caractérisé en ce que** l'antenne (10) du module comporte deux enroulements distincts (10a, 10b) de spires s'étendant entre ses deux extrémités (55, 56), ces deux enroulements (10a, 10b) étant configurés de manière qu'un premier enroulement de spires (10a) démarre à partir d'une première extrémité (55), s'enroule autour de premiers puits de connexion (50, 51) et rejoint le second enroulement de spires (10b) qui s'enroule autour de seconds puits de connexion (52, 53, 54) et s'étend jusqu'à la seconde extrémité (56) de l'antenne.

2. Module électronique (1) selon la revendication 1, **caractérisé en ce que** lesdits enroulements (10a, 10b) de spires sont coplanaires.

3. Module électronique (1) selon la revendication 1 ou la revendication 2, **caractérisé en ce que** les deux enroulements (10a, 10b) de spires sont connectés en série et s'enroulent dans un même sens.

4. Module électronique (1) selon la revendication 3, **caractérisé en ce que** dans les spires de l'antenne (10) situées entre lesdits premiers puits de connexion (50, 51) et lesdits seconds puits de connexion (52, 53, 54), le courant électrique de l'antenne (10) circule dans le même sens.

5. Module électronique (1) selon la revendication 1 ou la revendication 2, **caractérisé en ce que** les deux enroulements (10a, 10b) de spires de l'antenne (10) sont connectés en série et s'enroulent dans des sens opposés.

6. Module électronique (1) selon la revendication 5, **caractérisé en ce que** dans les spires de l'antenne (10) situées entre lesdits premiers puits de connexion (50, 51) et lesdits seconds puits de connexion (52, 53, 54), le courant électrique circule dans des sens opposés.

7. Module électronique (1) selon l'une quelconque des revendications précédentes, **caractérisé en ce que** l'inductance L de l'antenne (10) est comprise entre 1 et 2,3 micro-Henry et que la puce présente une capacité comprise entre 17 et 70 pico Farad.

8. Carte à puce à double interface de communication à contact et sans contact, **caractérisé en ce qu'**elle comporte un module électronique (1) selon l'une quelconque des revendications 1 à 7.

## Patentansprüche

1. Elektronisches Modul (1) für eine Chipkarte mit einem Substrat (19), das an einer ersten Seite eine Klemmenleiste mit elektrischen Kontakten (Cᵢ) umfasst, die gemäß der Norm ISO 7816 genormt sind und einen Betrieb durch Kontakt mit den entsprechenden Kontakten eines Chipkartenlesers sowie mit gegenüber den genormten Kontakten positionierten Anschlussschächten (50, 51, 52, 53, 54) ermöglichen, wobei das Substrat (19) an einer zweiten Seite eine Antenne (10) des elektronischen Moduls (1) und einen mikroelektronischen Chip (20) umfasst, der durch einen Verkapselungsbereich (30) geschützt und mit einer kontaktbasierten Kommunikationsschnittstelle und einer kontaktlosen Kommunikationsschnittstelle mit zwei im Innern des Verkapselungsbereichs angeordneten Anschlüssen (L_{A}, L_{B}) zum Anschließen an die beiden Enden (55, 56) der Antenne (10) versehen ist, **dadurch gekennzeichnet, dass** die Antenne (10) des Moduls zwei getrennte Drahtwicklungen (10a, 10b) umfasst, die sich zwischen ihren beiden Enden (55, 56) erstrecken, wobei diese beiden Wicklungen (10a, 10b) so gestaltet sind, dass eine erste Drahtwicklung (10a) an einem ersten Ende (55) beginnt, um erste Anschlussschächte (50, 51) gewickelt ist und auf die zweite Drahtwicklung (10b) trifft, die um zweite Anschlussschächte (52, 53, 54) gewickelt ist und sich bis zum zweiten Ende (56) der Antenne erstreckt.

2. Elektronisches Modul (1) nach Anspruch 1, **dadurch gekennzeichnet, dass** die Drahtwicklungen (10a, 10b) koplanar sind.

3. Elektronisches Modul (1) nach Anspruch 1 oder Anspruch 2, **dadurch gekennzeichnet, dass** die beiden Drahtwicklungen (10a, 10b) in Reihe geschaltet und in ein und derselben Richtung gewickelt sind.

4. Elektronisches Modul (1) nach Anspruch 3, **dadurch gekennzeichnet, dass** der elektrische Strom der Antenne (10) in den Drahtwindungen der Antenne (10), die zwischen den ersten Anschlussschächten (50, 51) und den zweiten Anschlussschächten (52, 53, 54) liegen, in ein und dieselbe Richtung fließt.

5. Elektronisches Modul (1) nach Anspruch 1 oder Anspruch 2, **dadurch gekennzeichnet, dass** die beiden Drahtwicklungen (10a, 10b) der Antenne (10) in Reihe geschaltet und in entgegengesetzten Richtungen gewickelt sind.

6. Elektronisches Modul (1) nach Anspruch 5, **dadurch gekennzeichnet, dass** der elektrische Strom in den Windungen der Antenne (10), die sich zwischen den ersten Anschlussschächten (50, 51) und den zweiten Anschlussschächten (52, 53, 54) befinden, in entgegengesetzten Richtungen fließt.

7. Elektronisches Modul (1) nach einem der vorhergehenden Ansprüche, **dadurch gekennzeichnet, dass** die Induktivität L der Antenne (10) zwischen 1 und 2,3 Mikrohenry liegt und der Chip eine Kapazität zwischen 17 und 70 Picofarad aufweist.

8. Chipkarte mit doppelter Schnittstelle für eine kontaktbasierte und eine kontaktlose Kommunikation, **dadurch gekennzeichnet, dass** sie ein elektronisches Modul (1) nach einem der Ansprüche 1 bis 7 umfasst.

## Claims

1. Electronic module (1) for a smart card, comprising a substrate (19) having on a first face a terminal block of electrical contacts (C¡) standardised according to ISO 7816 standard allowing operation by contact with the corresponding contacts of a smart card reader and connection wells (50, 51, 52, 53, 54) positioned opposite said standardised contacts, said substrate (19) comprising on a second face an antenna (10) of the electronic module (1) and a microelectronic chip (20) protected by an encapsulation zone (30) and provided with a contact communication interface and a contactless communication interface provided with two terminals (_{LA},_{LB}) designed to be connected to the two ends (55, 56) of the antenna (10) and arranged inside the encapsulation zone, **characterised in that** the antenna (10) of the module comprises two separate windings (10a, 10b) of turns extending between its two ends (55, 56), these two windings (10a, 10b) being configured so that a first winding of turns (10a) starts from a first end (55), wraps around first connection wells (50, 51) and joins the second winding of turns (10b) which wraps around second connection wells (52, 53, 54) and extends to the second end (56) of the antenna.

2. Electronic module (1) according to claim 1, **characterised in that** said windings (10a, 10b) of turns are coplanar.

3. Electronic module (1) according to claim 1 or claim 2, **characterised in that** the two windings (10a, 10b) of turns are connected in series and wind in the same direction.

4. Electronic module (1) according to claim 3, **characterised in that** in the turns of the antenna (10) located between said first connection wells (50, 51) and said second connection wells (52, 53, 54), the electric current of the antenna (10) flows in the same direction.

5. Electronic module (1) according to claim 1 or claim 2, **characterised in that** the two windings (10a, 10b) of turns of the antenna (10) are connected in series and wind in opposite directions.

6. Electronic module (1) according to claim 5, **characterised in that** in the turns of the antenna (10) located between said first connection wells (50, 51) and said second connection wells (52, 53, 54), the electric current flows in opposite directions.

7. Electronic module (1) according to any one of the preceding claims, **characterised in that** the inductance L of the antenna (10) is between 1 and 2.3 micro-Henry and that the chip has a capacitance of between 17 and 70 pico Farad.

8. Smart card with a dual contact and contactless communication interface, **characterised in that** it comprises an electronic module (1) according to any one of claims 1 to 7.
